# EUROPEAN PATENT SPECIFICATION

(11) **EP 3 920 103 B1**
(45) Date of publication and mention of the grant of the patent: **07.08.2024**
(21) Application number: 20178576.3
(22) Date of filing: 05.06.2020
(51) Int. Cl.: G06N 3/092, G06N 5/01, G06N 3/008

(54) **DEVICE AND METHOD FOR PLANNING AN OPERATION OF A TECHNICAL SYSTEM**
VORRICHTUNG UND VERFAHREN ZUR PLANUNG EINES BETRIEBS EINES TECHNISCHEN SYSTEMS
DISPOSITIF ET PROCÉDÉ DE PLANIFICATION D'UNE OPÉRATION D'UN SYSTÈME TECHNIQUE

(43) Date of publication of application: 08.12.2021
(73) Proprietor: Robert Bosch GmbH, 70442 Stuttgart (DE)
(72) Inventor: Biedenkapp, Andre, 79106 Freiburg im Breisgau (DE); Speck, David, 79108 Freiburg im Breisgau (DE); Hutter, Frank, 79110 Freiburg (DE); Lindauer, Marius, 31275 Lehrte (DE); Mattmueller, Robert, 79117 Freiburg im Breisgau (DE); Spitz, Jonathan, 71229 Leonberg (DE)

(56) References cited:
- WO-A1-2020/040763
- US-A1- 2018 089 563
- US-A1- 2020 033 869
- ANDRÉ BIEDENKAPP ET AL: "Dynamic Algorithm Configuration: Foundation of a New Meta-Algorithmic Framework", 23 January 2020 (2020-01-23), XP055755551, Retrieved from the Internet <URL:https://www.tnt.uni-hannover.de/papers/data/1432/20-ECAI-DAC.pdf> [retrieved on 20201201]

## Description

The invention concerns a method for planning an operation of a technical system within its environment, a computer program and a machine-readable storage medium as defined by the appended claims.

### Prior art

Heuristics are an approach to problem solving that are derived from previous experiences in similar problems. A heuristic technique is generally not guaranteed to be optimal but is sufficient for reaching an immediate goal. Such techniques are commonly used in computer science to quickly finding an approximate solution to a problem when classical methods are slow or unable to find any exact solution, e.g. to find a path of a robot to the immediate goal. For example, heuristics are commonly used to improve the convergence of search algorithms, such as A* search, by deciding which possibities to explore first.

Heuristic forward search is one of the most popular and successful techniques in classical planning. Although there is a large number of heuristics, it is known that the performance, i.e. the informativeness, of a heuristic varies from domain to domain. While in optimal planning it is easy to combine multiple admissible heuristic estimates, e.g. using the maximum, in satisficing planning the estimates of inadmissible heuristics are difficult to combine in a reasonable way. The reason for this is that highly inaccurate and uninformative estimates of a heuristic can have a negative effect on the entire search process when aggregating all estimates. D1: US 2018/089563 A1 is concerned with assisting in decisions on control actions of an autonomous vehicle. It is proposed to utilize a Monte Carlo tree search to find an optimal sequence of actions for the vehicle to reach a goal based on heuristics.

### Advantages of the invention

Since the performance of a heuristic varies from domain to domain, alternating between multiple heuristics during the search makes it possible to use all heuristics equally and improve performance.

However, this approach ignores the internal search dynamics of a planning system, which can help to select the most helpful heuristics for the current expansion step.

### The inventors propose to utilize a policy, preferably trained via Dynamic

Algorithm Configuration (DAC), for dynamic heuristic selection which takes into account the internal search dynamics of a planning system. This has the advantage that it generalizes over existing approaches and can exponentially improve the performance of the heuristic search and exceed existing approaches in terms of coverage. Hence, the present invention finds more quickly a solution than classical methods, and the solution is very close to the optimal solution.

DAC utilizes reinforcement learning to learn policies for online adjustments of algorithm parameters in a data-driven way by formulating the dynamic algorithm configuration as a contextual Markov decision process, such that reinforcement learning not only learns a policy for a single instance, but across a set of instances. DAC is disclosed in detail here: https://ml.informatik.unifreiburg.de/papers/20-ECAI-DAC.pdf.

### Disclosure of the invention

In a first aspect, a computer-implemented method for planning an operation of a technical system within its environment is disclosed. Said environment is characterized by a current domain out of a set of different domains, a current state out of a set of states of the respective domains and a set of possible operations, which can be carried out by the technical system within each domain. The method is defined in appended claim 1.

It is proposed that after the step of determining the operation of the technical system by choosing the operation with the lowest value returned by the selected heuristic depending on a current state, a control signal configured to control the technical system to carry out the next operation can be determined. Furthermore, in a subsequent step, the technical system can be controlled depending on the determined operation or depending on the determined control signal.

The advantage of the method is that the policy, in particular with its special input: state information and in particular the costs, is able to guide the technical system more efficient towards the goal state. For example if the technical systems heads forward to an obstacle, typically due to standard heuristic planning, the technical system needs some trails in order to find a way around the obstacle. Because of the policy, a heuristic is chosen that minimizes the overall number of required states to reach the goal state, the policy would select a heuristic which can prevent to trying out to find a way around via a flexible choose of the heuristic out of the set of heuristics with the expected minimal number of expanded states to reach the goal state.

Another advantage is that the planning procedure can be used for a variety of different environments and is therefore flexible. The planner can switch between domains. Furthermore, due to the policy an optimal heuristic can be found for different progresses of the technical system towards reaching its goal state, e.g. during beginning a course heuristic is more efficient, wherein in the proximity of the goal state, a finer heuristic is more efficient. Therefore, the planning method is very powerful and flexible.

Under domains it can be understood a structure and/or a classification of the environment of the technical system, e.g. indoor/outdoor or city/highway, etc. Also conditions of the environment of the technical system can be understood under domain, e.g. weather conditions (rainy, sunny, snowy,..) or light conditions, etc.

The current state can also extended and comprises features characterizing the internal state of the technical system.

It is noted that the present method can directly applied to a setting comprising a plurality of goal states.

Preferably, the state information can also include previously determined costs of previous states and the policy also choses the heuristic depending on previous determined costs.

Preferably, the policy can be configured or trained to select the most informative heuristic at each step of the planning procedure. Costs have to be spend for carrying out the operations of the technical system. The total costs refers to the sum of the necessary costs to reach the goal state. For example, costs can corresponds to energy and/or time.

Reachable states are these states which can be immediately reached by the technical system by carrying out at least one operation from the current state. Additionally or alternatively, the policy can be trained in such a way that the technical system requires a minimal number of operations to accomplish the goal state.

Furthermore, it is proposed that the current state for each domain out of the plurality of domains is characterized by at least the following features: maximum cost that can be returned by each heuristic of the set of predefined heuristics, minimum cost that can be returned by each heuristic of the set of predefined heuristics, average costs returned from each heuristic of the set of predefined heuristics, variance of the costs returned from each heuristic of the set of predefined heuristics, number of states maintained by each heuristic of the set of predefined heuristics, and the current time step.

The time step is a time step of a sequence of time steps starting from the first state of the technical system, wherein each time step is assigned to a state of the technical system.

Advantageously, the state features, that inform the policy about the characteristics and preferably about the behavior of the planning procedure, are domain independent, such that the same features can be used for a wide variety of domains. In addition, such state features should be cheap to compute in order to keep the overhead as low as possible making them applicable for time critical systems or situations.

Furthermore, it is proposed that the state further comprises a feature reflecting context information of the current domain. It is possible to reflect an domain with state features that describe, for example, the variables, operators or the causal graph, e.g. as disclosed by Sievers, S.; Katz, M.; Sohrabi, S.; Samulowitz, H.; and Ferber, P. 2019. Deep learning for cost-optimal planning: Task dependent planner selection. This has the advantage that the policy can better adjusted to the different domains and is able to make more precise decisions.

If the goal is to learn robust policies that can handle highly heterogeneous sets of domains, it is possible to add contextual information about the planning domain at hand, such as the problem size or the required preprocessing steps, as exemplarily shown by Fawcett, C.; Vallati, M.; Hutter, F.; Hoffmann, J.; Hoos, H.; and Leyton-Brown, K. 2014. Improved features for runtime prediction of domain-independent planners. In Proc. ICAPS 2014.

Furthermore, it is proposed that the steps i) to iv) are subsequently carried out several times until the current state corresponds to the goal state, wherein the chosen states with the lowest costs are stored in a list, wherein depending on the list, a sequence of operations is determined which generates a sequence of states of the list to reach the goal state. Optionally, the heuristics are determined for all previously expanded states stored in the lists.

This procedure, namely a state with the minimal cost is expanded and its subsequent state is added to the list, can be referred to as heuristic search.

Additionally or alternatively, the policy can be trained in such a way that the heuristic search minimizes the number of state expansions.

Utilizing the policy for heuristic search has the advantage to improve the search performance exponentially, since it helps to reduce the search effort and thus improves the performance of a planner. Because the policy selects the heuristic with the expected lowest planning time, which increases then exponentially, only one heuristic selected by the policy is sufficient to expand the search space to find a path to the goal state. Therefore, less states are stored in the list improving exponentially the performance.

If more than one goal state is defined, it is sufficient to carry out the steps i) to iv) until at least one goal state is accomplished.

Furthermore, it is proposed that depending on the sequence of operations, the technical system is controlled or a trajectory is determined for controlling the technical system.

Furthermore, it is proposed that for each heuristic, a list is used and the most promising state of each list is with the corresponding list expanded, wherein a successor state is added to all lists and evaluated with the corresponding heuristics of the respective lists.

This has the advantage that a search progress is shared between the heuristics resulting in a more efficient search procedure.

Furthermore, it is proposed that the set of heuristics comprise at least one of the following heuristics: fast-forward planning heuristic or causal graph heuristic or context-enhanced additive heuristic or an additive heuristic.

Said heuristics are described by the following publications: Hoffmann, J., and Nebel, B. 2001. The FF planning system: Fast plan generation through heuristic search. JAIR 14:253- 302; and
Helmert, M. 2004. A planning heuristic based on causal graph analysis. In Proc. ICAPS 2004, 161-170; and
Helmert, M., and Geffner, H. 2008. Unifying the causal graph and additive heuristics. In Proc. ICAPS 2008, 140- 147; and
Bonet, B., and Geffner, H. 2001. Planning as heuristic search. AIJ 129(1):5-33.

Furthermore, it is proposed that the policy is trained via reinforcement learning.

The advantage of reinforcement learning is that simulation have shown that said trained policy can nearly recover the optimal policy.

During reinforcement learning, the policy receives the state information, and in particular costs of all heuristics, and learns therefrom which heuristic out of the set of heuristics is potentially the best one for a given domain and state.

Furthermore, it is proposed that the policy is trained by Dynamic Algorithm Control (DAC).

Furthermore, it is proposed that a sparse reward function is utilized. A sparse reward function ignores aspects such as the quality of a plan, but its purpose is to reduce the search effort and thus improve search performance.

Embodiments of the invention will be discussed with reference to the following figures in more detail. The figures show:
- Figure 1: a control system having a classifier controlling an actuator in its environment;
- Figure 2: the control system controlling an at least partially autonomous robot;
- Figure 3: the control system controlling a manufacturing machine;

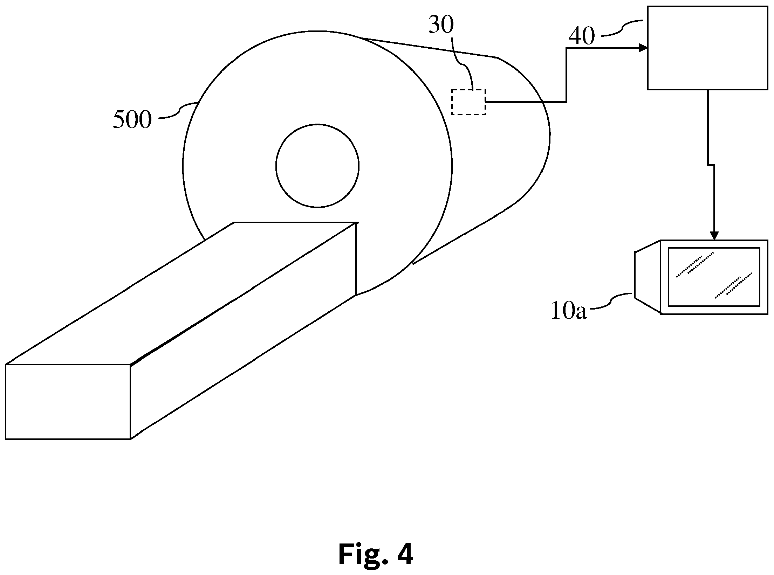

- Figure 4: the control system controlling an imaging system;

### Description of the embodiments

The general idea of planning algorithms with a single heuristic *h* is to start with the initial state and to expand the most promising states based on the heuristic *h* until a goal state is found. During the search, relevant states are stored in an open list that is sorted in ascending order by the values returned by the heuristic depending on the respective states so that the state with the lowest heuristic values, i.e. the most promising state, is at the top. More precisely, in each step a state s with minimal heuristic value is expanded, i.e. its successors are generated and states not already expanded are added to the open list according to their heuristic values *h*(*s*). Within an open list, for states with the same heuristic value (h-value) the tie-breaking rule can be used according to the first-in-first-out principle.

In satisficing planning, it is possible to combine multiple heuristic values for the same state in arbitrary ways. It has been shown, however, that the combination of several heuristic values into one, e.g. by taking the maximum or a (weighted) sum, does not lead to informative heuristic estimates. This can be explained by the fact that if one or more heuristics provide very inaccurate values, the whole expansion process is affected. It was proposed to maintain multiple heuristics *H = h*₀, ... , *h*_{*n-*1} within one greedy best-first search. More precisely, it is possible to maintain a separate open list for each heuristic *h* ∈ H and switch between them at each expansion step while always expanding the most promising state of the currently selected open list. The generated successor states are then added to all open lists and evaluated with the corresponding heuristic function. This makes it possible to share the search progress. In particular, a predetermined alternated selection, in which all heuristics are selected one after the other in a cycle such that all heuristics are treated and used equally, has proven to be an efficient method. Such equal use of heuristics can help to progress the search space towards a goal state, even if only one heuristic is informative. However, in some cases it is possible to infer that some heuristics are currently, i.e. in the current search space, more informative than others, which is ignored by the alternating selection. Because of the alternation selection, the choice of the heuristic depends only on the current time step and not on the current search dynamics or planner state.

It is possible to maintain a set of heuristics H each associated with a separate open list in order to allow the alternation between such heuristics.

Considering *H* as an configuration space *φ* of a heuristic search algorithm *A* and each state expansion as a time step t, it is possible to classify different dynamic heuristic selection strategies within the framework of algorithm configuration.

For example, alternation is an adaptive control policy because it maps each time step to a specific heuristic, i.e. configuration, independent of the domain or the state of the planner. The selection of a particular heuristic depending on the current domain before solving the domain, is an algorithm selection policy that depends only on the domain and not on the current time step or the internal state of the planner.

The inventors found that all three components -the domain, the time step, and the state of the planner- can be important and helpful in selecting the heuristic for the next state expansion.

Therefore, the inventors propose to use a dynamic algorithm configuration policy *π* trained via reinforcement learning in order to reduce the search effort and thus improving the performance of a planner.

In a preferred embodiment, Dynamic Algortihm Configuration (DAC) for learning the policy *π* is proposed.

DAC is a recent meta algorithmic framework that makes it possible to learn to adjust the hyperparameters of an algorithm given a description of the algorithm's behavior.

DAC operates as follows: Given a parameterized algorithm *A* with its configuration space *φ*, a set of problem domains *I* the algorithm has to solve, a state description s of the algorithm *A* solving an domain *i* ∈ *I* at time step t ∈ *N*₀, and a reward signal *r* assessing the reward of using policy *π* to control *A* on an domain *i* ∈ *I*. The goal is to find policy *π* that adapts a configuration *φ* ∈ Φ given a state s of A at time *t* optimizing its reward across a set of domains. Note that the current time step *t* and domain *i* ∈ *I* can be encoded in the state description of an algorithm *A*.

At each time step *t*, the planner sends the current internal state *s*~ and the corresponding reward *r* to the policy *π* based on which the controller decides which heuristic *h* ∈ H to use. The planner progresses according to the decision to the next internal state with its reward.

For the reward function of DAC, a reward of -1 is proposed for each expansion step that the planning system has to perform in order to find a solution. Using this reward function, a configuration policy learns to select heuristics that minimize the expected number of state expansions until a solution is found. This reward function can be referred to as a sparse reward function and ignores aspects such as the quality of a plan, but its purpose is to reduce the search effort and thus improve search performance. Clearly, it possible to define other reward functions with, e.g., dense rewards to make the learning easier.

The policy learns which heuristic will be the most informative at each step of the solution search. It is learned through trial and error with RL in simulations. All heuristics can be run in parallel and the list of the heuristics are updated then. Preferably, the RL policy receives features on the values of all heuristics as a state.

Preferably, the policy *π* is a neural network. Simulation have shown that a 2-layer network with roughly 75 hidden units and a linear decay for *ε* over 5×10^5 steps from 1 to 0:1 worked best and it was possible to learn policies with a performance close to the optimal policy.

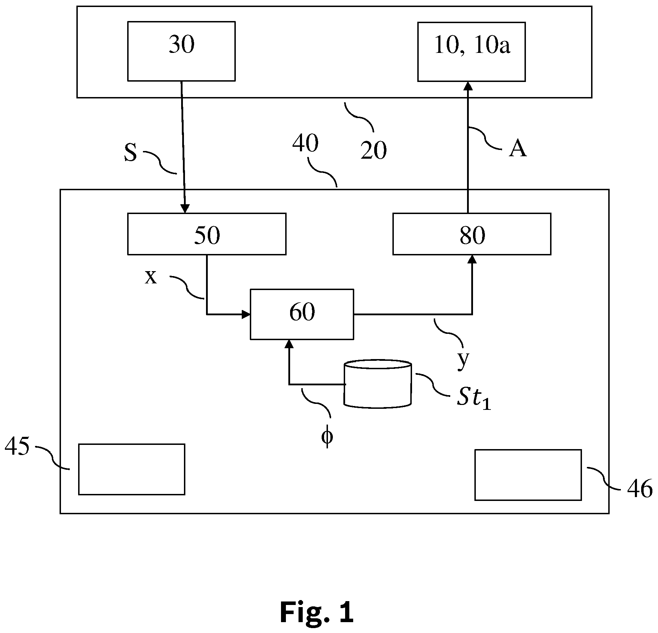

Shown in figure 1 is one embodiment of an actuator 10 in its environment 20. Actuator 10 interacts with a control system 40. Actuator 10 and its environment 20 will be jointly called actuator system. At preferably evenly spaced distances, a sensor 30 senses a condition of the actuator system. The sensor 30 may comprise several sensors. Preferably, sensor 30 is an optical sensor that takes images of the environment 20. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator 10.

Control system 40 receives the stream of sensor signals S of sensor 30 in an optional receiving unit 50. Receiving unit 50 transforms the sensor signals S into input signals x describing the state s. Alternatively, in case of no receiving unit 50, each sensor signal S may directly be taken as an input signal x

Input signal x is then passed on to the control policy 60, which may, for example, be given by an artificial neural network.

Control policy 60 is parametrized by parameters φ, which are stored in and provided by parameter storage *St*₁*.*

Control policy 60 determines the selection of the heuristic out of the set of heuristics H depending on the input signals x. The heuristic comprises information that assigns one or more labels to the input signal x. The heuristic is transmitted to a processor 45, which determines the next state for which the heuristic y returns the lowest costs. A corresponding operation, which has to be carried out by an actor to reach the next state is determined by the processor 45. The corresponding operation is referred to as output signal y. An optional conversion unit 80, which converts the output signals y into the control commands A. Actuator control commands A are then transmitted to actuator 10 for controlling actuator 10 accordingly. Alternatively, output signals y may directly be taken as control commands A.

Actuator 10 receives actuator control commands A, is controlled accordingly and carries out an action corresponding to actuator control commands A. Actuator 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

Preferably, the invention can be used to improve the performance of a problem solving algorithm where a set of heuristics are available. Particularly, the invention can help a search algorithm find a solution more quickly by selecting the best heuristic to use in each step. For example, such search algorithms can be applied to find an optimal path for a mobile robot in a path planning problem or an optimal distribution of jobs to available transportation robots or production machines in a scheduling problem.

In the scheduling case, a set of jobs *J* with various durations needs to be distributed between a set of machines M with various properties. E.g. in the semiconductor industry, different machines are used for different parts of the production process: etching, deposition, photo-lithography, etc. Some machines can complete batches of jobs at once, while other can only take care of one job at a time. Scheduling all jobs such that they are all completed in the shortest time possible is a computationally hard problem which is usually solved with numerical solvers.

To make the search more efficient, many different heuristics (or dispatching rules) can be used, for example:
- First-In-First-Out (FIFO) will schedule first the job that arrived first,
- Earliest Due Date (EDD) will prioritize the job with the earliest due date, i.e. the one that the customer is expecting at the earliest,
- Shortest Processing Time (SPT) will schedule the job with the shortest processing time first. It is known that using this heuristic leads to a short cycle time,
- Highest Value First (HVO) will schedule the job of the highest value to the customer first,
- Weighted SPT (WSPT) is a version of SPT that also takes into account the value of the job.

When combining these heuristics to search for the best solution, a search algorithm might fill in the first job in the job queue using WSPT, the second with EDD, the third with HVO and so forth. The policy has learned which is the best heuristic, i.e. which provides the most information, at each step of the scheduling process.

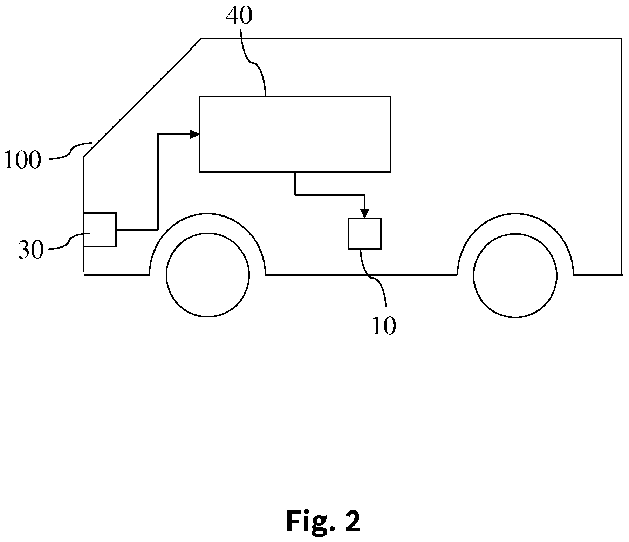

Figure 2 shows an embodiment in which control system 40 is used to control an at least partially autonomous robot, e.g. an at least partially autonomous vehicle 100, in particular for the above mentioned scheduling case.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

Actuator 10, which is preferably integrated in vehicle 100, may be given by a brake, a propulsion system, an engine, a drivetrain, or a steering of vehicle 100.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator 10 may be a nozzle for spraying chemicals. Depending on an identified species and/or an identified state of the plants, an actuator control command A may be determined to cause actuator 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

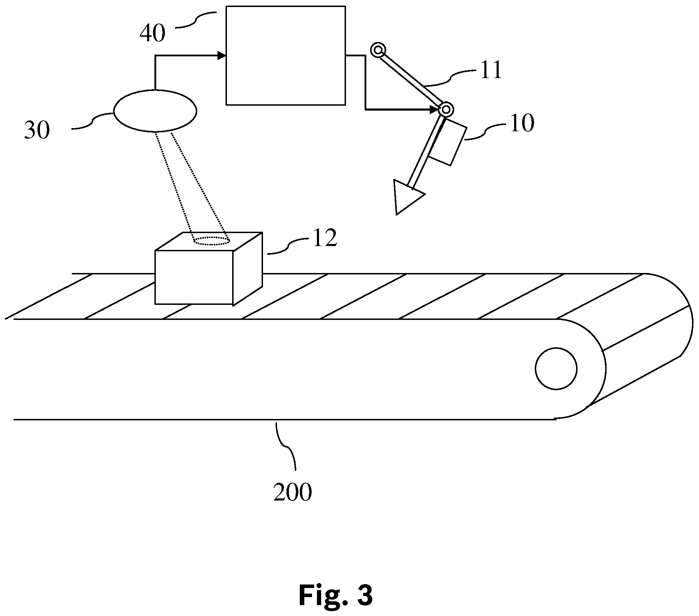

Shown in figure 3 is an embodiment in which control system 40 is used to control a manufacturing machine 11, e.g. a punch cutter, a cutter or a gun drill) of a manufacturing system 200, e.g. as part of a production line. The control system 40 controls an actuator 10 which in turn control the manufacturing machine 11.

Sensor 30 may be given by an optical sensor which captures properties of e.g. a manufactured product 12. Control policy 60 may determine a state of the manufactured product 12 from these captured properties. Actuator 10 which controls manufacturing machine 11 may then be controlled depending on the determined state of the manufactured product 12 for a subsequent manufacturing step of manufactured product 12. Or, it may be envisioned that actuator 10 is controlled during manufacturing of a subsequent manufactured product 12 depending on the determined state of the manufactured product 12.

Shown in figure 7 is an embodiment of a control system 40 for controlling an imaging system 500, for example an MRI apparatus, x-ray imaging apparatus or ultrasonic imaging apparatus. Sensor 30 may, for example, be an imaging sensor. Machine learning system 60 may then determine a classification of all or part of the sensed image. Actuator control signal A may then be chosen in accordance with this classification, thereby controlling display 10a. For example, machine learning system 60 may interpret a region of the sensed image to be potentially anomalous. In this case, actuator control signal A may be determined to cause display 10a to display the imaging and highlighting the potentially anomalous region.

## Claims

1. A computer-implemented method for planning an operation of a technical system (10) within its environment (20),
wherein the technical system is a robot or a transportation system, wherein the operations corresponds to predefined movements of the robot or the transportation system,
wherein said environment is **characterized by** a current domain (i) out of a set of different domains (*I*)*,* a current state (s) out of a set of states of the respective domains and a set of possible operations, which can be carried out by the technical system within each domain, wherein the domains characherize a structure, a classification and/or conditions of the environment of the technical system,
the method comprises the following steps, wherein the steps i) to iv) are subsequently carried out several times until the current state corresponds to the goal state, wherein the chosen states with the lowest costs are stored in a list, wherein depending on the list, a sequence of operations is determined which generates a sequence of states of the list to reach the goal state:
i) Obtaining state information comprising at least the current domain (i), the time step (t) and the current state (*s*) of the environment;
ii) Determining by each heuristic out of a set of predefined heuristics costs for a plurality of reachable states from the current state,
wherein the heuristics are configured to estimate costs to reach a goal state from a given state,
wherein the set of heuristics comprise at least one of the following heuristics:
fast-forward planning heuristic or causal graph heuristic or context-enhanced additive heuristic or an additive heuristic,
wherein for each heuristic a list is used and the most promising state with the lowest cost of the corresponding list of the selected heuristic by the policy (*π*) is expanded;
ili) Selecting a heuristic out of the set of predefined heuristics by a policy (*π*) depending on the state information,
wherein the policy (*π*) has been trained to select the heuristic from the set of predefined heuristics, such that a minimal number of state expansions is expected if planning a path to the goal state;
iv) Choosing the state with the lowest cost determined by the selected heuristic by the policy (*π*) from the reachable states; and
v) Determining an operation of the technical system out of the set of possible operation that has to be carried out by the technical system to reach said state with the lowest cost determined by the selected heuristic.

2. Method according to claim 1, wherein the current state for each domain out of the plurality of domains is **characterized by** at least the following features:
maximum cost that can be returned by each heuristic of the set of predefined heuristics, minimum cost that can be returned by each heuristic of the set of predefined heuristics, average costs returned from each heuristic of the set of predefined heuristics, variance of the costs returned from each heuristic of the set of predefined heuristics, number of states maintained by each heuristic of the set of predefined heuristics, and the current time step (t).

3. Method according to claim 2, wherein the state further comprises a features reflecting context information of the current domain.

4. Method according to any of the above claims, wherein the policy is trained via reinforcement learning.

5. Method according to claim 4, wherein the policy is trained by Dynamic Algorithm Control (DAC).

6. Method according to claim 4 or 5, wherein a sparse reward function is utilized.

7. Computer program that is configured to cause a computer to carry out the method according to any one of claims 1 to 6 with all of its steps when the computer program is carried out by a processor (45, 145).

8. Machine-readable storage medium (46, 146) on which the computer program according to claim 7 is stored.

9. System which is configured to carry out the method according to any of the claims 1 to 6.

## Patentansprüche

1. Computer-implementiertes Verfahren zum Planen eines Betriebs eines technischen Systems (10) innerhalb seiner Umgebung (20),
wobei das technische System ein Roboter oder ein Transportsystem ist, wobei die Betriebsvorgänge vordefinierten Bewegungen des Roboters oder des Transportsystems entsprechen,
wobei die Umgebung **gekennzeichnet ist durch** eine aktuelle Domäne (i) aus einer Menge unterschiedlicher Domänen (*I*), einen aktuellen Zustand (s) aus einer Menge von Zuständen der jeweiligen Domänen und einer Menge möglicher Betriebsvorgänge, die durch das technische System innerhalb jeder Domäne ausgeführt werden können, wobei die Domänen eine Struktur, eine Klassifizierung und/oder Bedingungen der Umgebung des technischen Systems kennzeichnen,
das Verfahren die folgenden Schritte umfasst, wobei die Schritte i) bis iv) anschließend mehrmals ausgeführt werden, bis der aktuelle Zustand dem Zielzustand entspricht, wobei die gewählten Zustände mit den geringsten Kosten in einer Liste gespeichert werden, wobei abhängig von der Liste eine Abfolge von Betriebsvorgängen bestimmt wird, die eine Abfolge von Zuständen der Liste zum Erreichen des Zielzustands generiert:
i) Erhalten von Zustandsinformationen, die mindestens die aktuelle Domäne (*i*), den Zeitschritt (t) und den aktuellen Zustand (s) der Umgebung umfassen;
ii) Bestimmen, durch jede Heuristik aus einer Menge vordefinierter Heuristiken, von Kosten für eine Mehrzahl erreichbarer Zustände aus dem aktuellen Zustand,
wobei die Heuristiken konfiguriert sind, um Kosten zum Erreichen eines Zielzustands aus einem gegebenen Zustand zu schätzen,
wobei die Menge von Heuristiken mindestens eine der folgenden Heuristiken umfasst: eine Fast-Forward-Planungsheuristik oder eine Causal-Graph-Heuristik oder eine Context-Enhanced-Additive-Heuristik oder eine additive Heuristik,
wobei für jede Heuristik eine Liste verwendet wird und der vielversprechendste Zustand mit den geringsten Kosten der entsprechenden Liste der ausgewählten Heuristik durch die Strategie (*π*) erweitert wird;
iii) Auswählen einer Heuristik aus der Menge vordefinierter Heuristiken durch eine Strategie (*π*) abhängig von den Zustandsinformationen,
wobei die Strategie (*π*) zum Auswählen der Heuristik aus der Menge vordefinierter Heuristiken trainiert worden ist, sodass eine Mindestanzahl von Zustandserweiterungen erwartet wird, wenn ein Weg zu dem Zielzustand geplant wird;
iv) Wählen des Zustands mit den durch die ausgewählte Heuristik bestimmten geringsten Kosten durch die Strategie (*π*) aus den erreichbaren Zuständen; und
v) Bestimmen eines Betriebs des technischen Systems aus der Menge möglicher Betriebsvorgänge, die durch das technische System ausgeführt werden müssen, um den Zustand mit den durch die ausgewählte Heuristik bestimmten geringsten Kosten zu erreichen.

2. Verfahren nach Anspruch 1, wobei der aktuelle Zustand für jede Domäne aus der Mehrzahl von Domänen durch mindestens die folgenden Merkmale gekennzeichnet ist:
maximale Kosten, die durch jede Heuristik der Menge vordefinierter Heuristiken zurückgegeben werden können, minimale Kosten, die durch jede Heuristik der Menge vordefinierter Heuristiken zurückgegeben werden können, durchschnittliche Kosten, die von jeder Heuristik der Menge vordefinierter Heuristiken zurückgegeben werden, Varianz der Kosten, die von jeder Heuristik der Menge vordefinierter Heuristiken zurückgegeben werden, Anzahl von Zuständen, die durch jede Heuristik der Menge vordefinierter Heuristiken aufrechterhalten werden, und den aktuellen Zeitschritt (t).

3. Verfahren nach Anspruch 2, wobei der Zustand ferner ein Kontextinformationen der aktuellen Domäne widerspiegelndes Merkmal umfasst.

4. Verfahren nach einem der obigen Ansprüche, wobei die Strategie durch verstärkendes Lernen trainiert wird.

5. Verfahren nach Anspruch 4, wobei die Strategie durch Dynamic Algorithm Control (DAC) trainiert wird.

6. Verfahren nach Anspruch 4 oder 5, wobei eine Funktion einer spärlichen Belohnung genutzt wird.

7. Computerprogramm, das konfiguriert ist, um zu bewirken, dass ein Computer das Verfahren nach einem der Ansprüche 1 bis 6 mit all seinen Schritten ausführt, wenn das Computerprogramm durch einen Prozessor (45, 145) ausgeführt wird.

8. Maschinenlesbares Speichermedium (46, 146), in dem das Computerprogramm nach Anspruch 7 gespeichert ist.

9. System, das konfiguriert ist, um das Verfahren nach einem der Ansprüche 1 bis 6 auszuführen.

## Revendications

1. Procédé, mis en œuvre par ordinateur, de planification d'une opération d'un système technique (10) à l'intérieur de son environnement (20),
le système technique étant un robot ou un système de transport, les opérations correspondant à des mouvements prédéfinis du robot ou du système de transport,
ledit environnement étant **caractérisé par** un domaine actuel (*i*) parmi un ensemble de domaines différents (*I*), un état actuel (*s*) parmi un ensemble d'états des domaines respectifs et un ensemble d'opérations possibles qui peuvent être réalisées par le système technique à l'intérieur de chaque domaine, les domaines caractérisant une structure, une classification et/ou des conditions de l'environnement du système technique,
le procédé comportant les étapes suivantes, les étapes i) à iv) étant ensuite réalisées plusieurs fois jusqu'à ce que l'état actuel corresponde à l'état visé, les états choisis qui présentent les plus faibles coûts étant stockés dans une liste, une succession d'opérations étant déterminée en fonction de la liste, qui génère une succession d'états de la liste pour atteindre l'état visé :
i) Obtenir des informations d'état comportant au moins le domaine actuel (*i*), le pas de temps (t) et l'état actuel (s) de l'environnement ;
ii) Faire déterminer, par chaque heuristique parmi un ensemble d'heuristiques prédéfinies, des coûts pour une pluralité d'états atteignables à partir de l'état actuel, les heuristiques étant configurées pour estimer des coûts pour atteindre un état visé à partir d'un état donné, l'ensemble d'heuristiques comportant au moins une des heuristiques suivantes: une heuristique de planification d'avance rapide, ou une heuristique de graphe causal, ou une heuristique additive enrichie par le contexte, ou une heuristique additive,
une liste étant utilisée pour chaque heuristique et l'état le plus prometteur présentant le plus faible coût de la liste correspondante de l'heuristique sélectionnée par la politique (*π*) étant étendu ;
iii) Faire sélectionner une heuristique parmi l'ensemble d'heuristiques prédéfinies par une politique (*π*) en fonction des informations d'état,
la politique (*π*) ayant été entraînée pour sélectionner l'heuristique parmi l'ensemble d'heuristiques prédéfinies, de façon à s'attendre à un nombre minimal d'expansions d'états en cas de planification d'un trajet jusqu'à l'état visé ;
iv) Choisir l'état présentant le plus faible coût déterminé par l'heuristique sélectionnée par la politique (*π*) parmi les états atteignables ; et
v) Déterminer une opération du système technique parmi l'ensemble d'opérations possibles qui doivent être réalisées par le système technique pour atteindre ledit état présentant le plus faible coût déterminé par l'heuristique sélectionnée.

2. Procédé selon la revendication 1, l'état actuel pour chaque domaine parmi la pluralité de domaines étant **caractérisé par** au moins les attributs suivants :
coût maximum qui peut être renvoyé par chaque heuristique de l'ensemble d'heuristiques prédéfinies, coût minimum qui peut être renvoyé par chaque heuristique de l'ensemble d'heuristiques prédéfinies, moyenne des coûts renvoyés à partir de chaque heuristique de l'ensemble d'heuristiques prédéfinies, variance des coûts renvoyés à partir de chaque heuristique de l'ensemble d'heuristiques prédéfinies, nombre d'états entretenus par chaque heuristique de l'ensemble d'heuristiques prédéfinies, et le pas de temps (t) actuel.

3. Procédé selon la revendication 2, l'état comportant en outre un attribut reflétant des informations de contexte du domaine actuel.

4. Procédé selon l'une quelconque des revendications ci-dessus, la politique étant entraînée par l'intermédiaire d'un apprentissage par renforcement.

5. Procédé selon la revendication 4, la politique étant entraînée par une commande dynamique d'algorithme (DAC).

6. Procédé selon les revendications 4 ou 5, une fonction de récompense parcimonieuse étant employée.

7. Programme informatique qui est configuré pour amener un ordinateur à réaliser le procédé selon l'une quelconque des revendications 1 à 6 avec toutes ses étapes lorsque le programme informatique est exécuté par un processeur (45, 145).

8. Support (46, 146) de stockage lisible par machine sur lequel est stocké le programme informatique selon la revendication 7.

9. Système configuré pour réaliser le procédé selon l'une quelconque des revendications 1 à 6.
